(19) Europäisches Patentamt
European Patent Office
Office européen des brevets

(11) **EP 4 158 314 B1**

(12) **EUROPEAN PATENT SPECIFICATION**

(45) Date of publication and mention
of the grant of the patent:
**01.10.2025 Bulletin 2025/40**

(21) Application number: **21813634.9**

(22) Date of filing: **24.05.2021**

(51) International Patent Classification (IPC):
*G01N 15/1429* (2024.01)     *G01N 15/1434* (2024.01)
*G01N 15/1433* (2024.01)     *G01N 15/01* (2024.01)
*G01N 15/10* (2024.01)        *G01N 21/47* (2006.01)

(52) Cooperative Patent Classification (CPC):
**G01N 15/1429; G01N 15/1433; G01N 15/1434;
G01N 21/4795;** G01N 2015/012; G01N 2015/1006;
G01N 2015/1445

(86) International application number:
**PCT/IL2021/050607**

(87) International publication number:
**WO 2021/240512 (02.12.2021 Gazette 2021/48)**

(54) **A TOMOGRAPHY SYSTEM AND A METHOD FOR ANALYSIS OF BIOLOGICAL CELLS**

TOMOGRAFIESYSTEM UND VERFAHREN ZUR ANALYSE BIOLOGISCHER ZELLEN

SYSTÈME DE TOMOGRAPHIE ET PROCÉDÉ D'ANALYSE DE CELLULES BIOLOGIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2020 US 202063029677 P**

(43) Date of publication of application:
**05.04.2023 Bulletin 2023/14**

(73) Proprietor: **Ramot at Tel-Aviv University Ltd.
Tel-Aviv 6139201 (IL)**

(72) Inventors:
• **SHAKED, Natan Tzvi
7683980 Mazkeret Bayta (IL)**
• **ATZITZ, Yuval
4840921 Rosh Hahayin (IL)**

(74) Representative: **Ipside
7-9 Allée Haussmann
33300 Bordeaux Cedex (FR)**

(56) References cited:
EP-B1- 1 579 372     US-A1- 2014 333 929
US-A1- 2017 205 390     US-A1- 2019 163 132

• MOR HABAZA ET AL: "Rapid 3D Refractive-Index Imaging of Live Cells in Suspension without Labeling Using Dielectrophoretic Cell Rotation", ADVANCED SCIENCE, vol. 4, no. 2, 21 October 2016 (2016-10-21), pages 1600205, XP055563982, ISSN: 2198-3844, DOI: 10.1002/advs.201600205
• GILI DARDIKMAN-YOFFE ET AL: "High-resolution 4D acquisition of freely swimming human sperm cells without staining", ARXIV.ORG, CORNELL UNIVERSITY LIBRARY, 201 OLIN LIBRARY CORNELL UNIVERSITY ITHACA, NY 14853, 22 February 2020 (2020-02-22), XP081606070

**Description**

**TECHNOLOGICAL FIELD**

The presently disclosed subject matter relates to tomography, and more specifically, to a tomography system and method for measuring biological samples or other samples.

**BACKGROUND**

Many biological analyses of individual cells, including blood screening and sperm-cell analysis, require extracting a certain feature of many cells in the cell population and averaging it, to present one value that is used for clinical diagnosis or biological studies, or even averaging many features at once. This is a tedious and subjective process, which is typically done manually: a person needs to analyze many cell images to obtain one collection decision of the entire cell population.

The publication *"Rapid 3D refractive-index imaging of live cells in suspension without labelling using dielectrophoretic cell rotation"* by Mor Habaza et al. (Advanced Science, Vol. 4, No. 2, October 21, 2016) presents a label-free tomographic interferometry approach. This approach provides rapid capturing of the 3D refractive-index distribution of single cells in suspension.

**GENERAL DESCRIPTION**

There is accordingly a need in the art for an effective solution to the problem of reconstructing a 3D refractive index profile of a plurality of cells. Existing tomographic approaches are based on either illumination rotation or controlled sample rotation, based on *a priori* knowledge on the angles of the acquired interferometric projections. More specifically, in regular tomography, a single cell is viewed from multiple angles by tomography, and all tomographic projections are reconstructed to the 3D refractive index profile of this single cell. In tomographic phase microscopy, interferometric projections of the specimen taken from multiple angles are processed and positioned in the 3-D Fourier space so that the RI (Refractive Index) map can be reconstructed.

The technique of the present invention is based on tomography (e.g. tomographic phase microscopy, optical diffraction tomography, etc.) of a plurality of cells and enables to analyze a population of biological cells at once. More specifically, the present invention provides a technique for quantifying an RI map i.e. morphological structural and content contribution of a plurality of cells, , in a population of biological cells of the same type in the form of one 3D cell model that represents the cell population. For example, a single 3D RI model can be used as the averaged model of the entire cell population, where the averaged model is obtained by collecting at least one perspective projection, i.e. a linear projection where three dimensional objects are projected on a picture plane where the sample is illuminated/viewed from a certain angle, from each cell in the population. Generally, all projections for all cells are collected, building many 3D models and only them average them. In this connection, it should be noted that the term *"3D RI model"* refers to a 3D RI distribution data of the sample and includes a 3D RI map and/or a 3D refractive index profile. The 3D RI model refers to a morphological structural and content contribution of the plurality of cells..

In the technique of the present invention, at least one tomographic projection comes from another cell in the cell population, and each cell in the population may contribute one or more projections to the final 3D refractive-index map. According to the present invention, there is provided a tomographic method according to claim 1 for analyzing a sample containing a population of biological cells. The method includes receiving a plurality of cell complex wavefronts (i.e. cell quantitative amplitude and phase profile) corresponding to a plurality of individual cells of the population; processing the plurality of cell complex wavefronts as different projections coming from various cells in the population; and generating a 3D refractive index model of the cell being indicative of the population of cells by using a plurality of projections. The processing of the cell complex wavefronts may comprise processing an image frame of the tomographic data as a projection, positioning the projection in a 3D Fourier domain at a determined orientation, and collecting a plurality of projections in inversed 3D Fourier transform to generate a 3D refractive index map of the sample. At least one projection coming from a different cell in the population. Additionally or alternatively, each cell may contribute to several projections.

The present invention thus provides a novel technique for collective tomography (i.e. analyzing many cells at once), without staining, using only one 3D model. In this technique, it is assumed that the cells in the population appear at various 3D angles, stationary on a slide or during flow. Processing the cell complex wavefronts as tomographic projection of the 3D refractive index map may comprise inducing multiple cells in the population to be acquired at different angles of projection. More specifically, 02724145\48-01 the population of cells may sit on a slide at various angles, or the cells may flow in various angles. Then, all tomographic projections from all the cells may be processed together into one collective 3D refractive-index map, representing the cell population, which can be used for quick evaluation of the population.

The method may be used for tomographic phase microscopy or computed tomography (CT) but is not limited to any particular application and/or to any tomography technique, even if not optical. For example, tomography methods, such as X-RAY CT or US CT or MRI CT can also be used with the same collective tomography approach.

In some embodiments, the method further includes acquiring tomographic data being indicative of a cell complex wavefront of each cell of the population. The tomographic data may or may not be holographic data. Non-interferometric acquisition techniques may also be used. Acquiring the tomographic data may include illuminating the sample with an illumination beam. The technique of the present invention may also work with rotation of the illumination beam or the entire sample. In this connection, it should be noted that the tomographic data that can be processed and analyzed by the technique of the present invention to provide such full 3D collective refractive-index map data is "raw data" in the meaning that it can be acquired by any suitable optical tomography or like quantitative phase imaging equipment, but may be implemented without a need for any physical mechanisms for rotation of the cell and/or the optical head of the imaging equipment and association of the image data piece with a respective angular orientation of the cell. More specifically, the tomographic data that can be used for the purpose of the present invention is holographic data, being raw holographic data in the meaning described above, and the invention is therefore described below with respect to this specific example. It should, however, be understood that the principles of the invention are not limited to this specific implementation of image data collection, provided that the image data comprises a sequence of image frames, each frame being indicative of a full complex wavefront of light propagation through a sample being imaged during the frame. Such holographic data may be obtained using quantitative phase microscope QPM (an interferometric or non-interferometric phase microscope).

In some embodiments, processing the cell complex wavefronts as tomographic projections of the 3D refractive index map includes multiple cells in the population to be acquired at different angles of cell projection. This may be achieved by positioning the cells at different angles e.g. by placing them on a rough surface, immersing them in a gel, or by inducing rotation during cell flow.

In some embodiments, acquiring the collective tomographic data may include determining at least one collection projection angle by correlating the cells to a two- or three-dimensional predefined geometrical shape. If the tomographic algorithm requires knowing the angle of the projection for processing it, a pre-defined model can be used to fit the projection to. For example, the angle of detection may be determined by 2D or 3D fitting or correlation to a pre-defined shape. This technique is particularly useful for cells of roughly known ideal shapes, such as red blood cells and sperm cells. For example, for sperm cells, the projection angle may be found by fitting the sperm head to an ellipsoid, and for red blood cell, the fitting can be done to an ideal bi-concave red blood cell shape. It is also possible to fit to other typical shapes of cells, which can be derived by averaging many existing typical 3D models of these cells. This fitting assumes that although the practical shape of the cell might be different than the ideal cell model it is fitted to, the accuracy of finding the angle of projection is good enough for using it for positioning the actual tomographic projection, so that all projections from all the acquired angles can be processed adequately.

The technique of the present invention may be integrated into many routine lab tests, including blood and sperm tests. Therefore, there is provided a novel technique for collective optical tomography, in which cell population can be analyzed at once by creating one 3D model representing the population, which can be used for quick medical analysis. This technique may be used for example for *in vitro* diagnosis (IVD) of individual cells, and in particular digital cell analysis (e.g. digital cytology). For example, this technique may be implemented for red blood cell pathological analysis (anemias, thalassemia, etc.) and sperm evaluations for fertility tests.

This method for collective analysis of a population of biological cells is based on their angular tomography, in which a plurality of cell quantitative phase profiles is acquired and used as one projection, for collective 3D refractive-index reconstruction. A single 3D refractive index profile is thus created for many cells together and can then be used for the cell population analysis.

Further according to the present invention, there is provided a tomography system according to claim 8 including a processing unit being configured and operable to receive tomographic data being indicative of a plurality of cell complex wavefronts corresponding to multiple cells in the population, process the plurality of cell complex wavefronts as different projections coming from various cells in the population (e.g. in the tomographic reconstructing algorithm), and generate a 3D refractive index model of the cell being indicative of the population of cells by using a plurality of projections. At least one projection comes from a different cell in the population. Additionally or alternatively, each cell may contribute to several projections.

In some embodiments, the processing unit is configured and operable to determine at least one collection projection angle by correlating the cells to a two- or three-dimensional predefined geometrical shape.

In some embodiments, the system further includes an illumination unit being configured and operable to illuminate a sample.

In some embodiments, the system further includes a detector being configured and operable to acquire tomographic data being indicative of a plurality of cell complex wavefronts of cells of the population and generating tomographic data indicative thereof; the processing unit is configured and operable for receiving the tomographic data from the detector. The detector may be a part of a microscope. The microscope may be an off-axis holographic phase microscope.

## BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

**Fig. 1** is a simplified block diagram showing the main functional elements of the novel off-axis interferometric system of the present invention according to some embodiments of the present invention;

**Fig. 2** is a flow chart showing the main functional steps of the novel method of the present invention according to some embodiments of the present invention;

**Figs. 3A-3C** show simulations for three blood cells with different diameters representing the tomography of the blood cells separately;

**Fig. 4** shows a simulation for the same three blood cells of **Figs. 3A-3C** representing a collective tomography of all cells together;

**Figs. 5A-5D** show several tomograms of three cells for 360 projections from each cell **(Figs. 5A-5B)** and from all the cells together **(Figs. 5C-5D);**

**Figs. 6A-6D** show several tomograms of three cells for 360 projections from each cell **(Figs. 6A-6B)** and from all the cells together **(Figs. 6C-6D);** and

**Fig. 7** shows a full 3-D reconstruction of a sperm cell, as an example how a 3-D RI profile of a cell might look like.

## DETAILED DESCRIPTION OF EMBODIMENTS

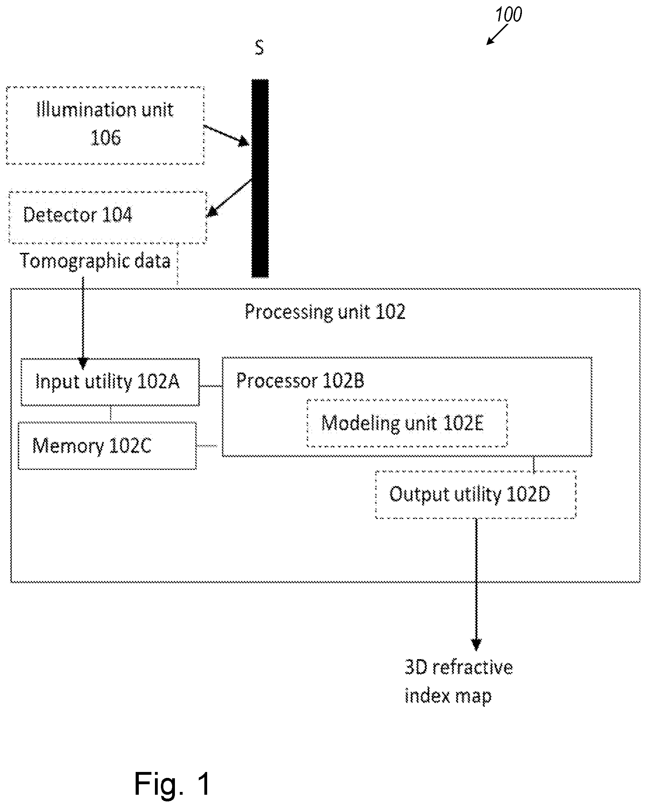

Reference is made to **Fig. 1** illustrating by way of a block diagram the main functional elements of the tomography system of the present invention. The tomography system **100** of the present invention includes a processing unit **102** being configured and operable to receive tomographic data being indicative of a cell complex wavefront of a plurality of individual cells of the population, and process the cell complex wavefronts as different projections, wherein at least one projection comes from a different cell in the population. Reconstruction of a 3D refractive index map of the population by using a plurality of projections coming from various cells in the population and generating a 3D cell model being indicative of the population of cells using tomographic phase microscopy, is described for example in Choi, W., Fang-Yen, C., Badizadegan, K. et al. Tomographic phase microscopy. Nature Methods 4, 717-719 (2007). https://doi.org/10.1038/nmeth1078 or optical diffraction tomography algorithms as described for example in Yongjin Sung, Wonshik Choi, Christopher Fang-Yen, Kamran Badizadegan, Ramachandra R. Dasari, and Michael S. Feld, "Optical diffraction tomography for high resolution live cell imaging," Opt. Express 17, 266-277 (2009). Tomography system **100** may include a detector **104** being configured and operable to acquire tomographic data being indicative of a cell complex wavefront of a plurality of cells of the population and generating tomographic data indicative thereof. Processing unit **102** is configured for data communication with a detector **104,** which may comprise an imaging system (its internal memory) which performs tomographic imaging sessions and generates the tomographic data, or by a separate storage system, which receives such data from imaging system(s) and stores the data for further use. Detector **104** suitable to provide tomographic data for the purposes of the invention, may be of any known suitable configuration capable of acquiring a sequence of images of a cell and providing data indicative of the complex wavefront of light (carrying intensity and phase information) that propagated through a sample being imaged. Such an imaging system may include a quantitative phase imaging QPI (such as interferometric phase imaging, or holographic imaging, or non-interferometric phase imaging techniques). The QPI-based image typically comprises a plurality of pixels, each pixel being characterized at least by an intensity and a corresponding phase delay. Generally, such image data is indicative of a complex wavefront describing an optical path delay (OPD) of light propagating through a sample being imaged. For simplicity, and without limiting the principles of the invention to any specific known imaging technique suitable to provide the OPD image data, the sequence of such OPD data pieces is referred to herein below as image frames.

Many OPDs together can be processed into a topographic map. The principles of configuration and operation of such a quantitative phase microscope are known and do not form part of the present invention, and therefore need not be specifically described, except to note the following:

In a specific non-limiting case in which QPI is implemented by interferometry, an interferometric system is capable to record the entire wavefront that propagated through a sample (rather than just its intensity), by interfering it with a constant (reference) wavefront, yielding a digital hologram (interferogram). The resultant hologram is given by the following expression:

$$|E_s(x,y) + E_r|^2 = |E_s(x,y)|^2 + |E_r|^2 + A_s(x,y)A_r exp[j\varphi_s(x,y) - j\varphi_r] + A_s(x,y)A_r exp[j\varphi_r - j\varphi_s(x,y)]$$

and $E_s(x,y)$ and $E_r$ are the sample and reference complex wavefronts, respectively (the latter is assumed to be of constant phase and amplitude), determined as:

$$E_s(x,y) = A_s(x,y)\exp[j\varphi_s(x,y)] \text{ and } Er = A\text{r}\exp[j\varphi\text{r}].$$

Thus, the wavefront that propagated through the sample is fully conserved, although its extraction remains difficult. Such an OPD image frame is, by itself, a topographic map, and, as per each x-y pair, there is an OPD value, which is representative of the optical height value of this x-y pair.

It should be noted that the invention is not limited to any specific type and configuration of imaging system which provides tomographic data. Also, as noted above, the reconstruction system of the present invention may receive tomographic data either from the imaging system (its memory utility) or from a separate storage device. Generally, processing unit **102** may be an integral part of an imaging system, or, as shown in a non-limiting example of **Fig. 1,** may be a stand-alone system in data communication with detector **104.** Accordingly, processing unit **102** may include an appropriate communication device capable of communication with remote systems using any known suitable communication technique and protocols. In this case, processing unit **102** is configured and operable for receiving the tomographic data from detector **104.** Processing unit **102** is thus in data communication with detector **104.** Therefore, detector **104** may or may not be a part of tomography system **100.** Tomography system **100** may also analyze tomographic data collected earlier. Tomography system **100** may also include an illumination unit **106** being configured and operable to illuminate a sample **S.** Illumination unit **106** may be a part of system **100** or may be external to system **100.** Although, as illustrated in the figure, illumination unit **106** and detector **104** are placed upstream to the sample **S** and on the same side of the sample **S,** the invention is not limited to any specific configuration and illumination unit **106** and detector **104** can be placed on the opposite side of the sample **S,** or upstream or downstream to the sample **S.**

In a specific and non-limiting example, holographic images of cells may be acquired by off-axis holographic phase microscopy, which allows high-resolution complex wavefront acquisition from a single camera shot of dynamic cells. The acquisition system may be any interferometric system such as Mach Zehnder or Michelson, or a non-interferometric quantitative phase imaging system. In the specific implementation of the invention, the system contained an inverted microscope, equipped with a microscope objective, an external nearly-common-path interferometric module, and a fast digital camera.

In general, processing unit **102** may be a processor, a controller, a microcontroller, or any kind of integrated circuit. Processing unit **102** is configured generally as a computing/electronic utility including *inter alia* such utilities as data input **102A** and output modules/utilities **102D,** memory **102C** (i.e. a non-volatile computer readable medium), and analyzer/data processing utility **102B.** For example, data input **102A** is configured and operable for receiving tomographic data comprising a sequence of holographic images/frames HIF1.....HIFk, each frame being indicative of a complex wavefront of light propagated through a cell, and processing utility **102B** processes this tomographic data to generate a reconstruction depth resolved data indicative of a 3D profile of the refractive index profile of the population of the cells, or at least a portion thereof. This reconstruction data is indicative of refractive index distribution data of the sample which can be stored in memory **102C.** Processing utility **102B** may be configured and operable to analyze segments of tomographic image frames and the corresponding 3D orientations, and, for each cell, apply complex wavefront-based processing to the segments of the tomographic image frames to generate reconstruction depth resolved data indicative of a 3D profile of the refractive index of the sample. More specifically, processing utility **102B** may be configured and operable to process each image frame as a projection and position it in the 3D Fourier domain at the orientation in which this projection is taken. The projections are collected in inversed 3D Fourier transform, yielding the 3D profile of the refractive index of the sample.

The utilities of the processing unit 102 may thus be implemented by suitable circuitry and/or by software and/or hardware components including computer readable code configured for receiving tomographic data being indicative of a cell complex wavefront of a plurality of cells of the population, and for processing the data to reconstruct a 3D refractive index map of the population. The features of the present invention may include a general-purpose or special-purpose computer system including various computer hardware components. Features within the scope of the present invention also include computer-readable media for carrying out or having computer-executable instructions, computer-readable instructions, or data structures stored thereon. Such computer-readable media may be any available media, which are accessible by a general-purpose or special-purpose computer system. In this description and in the following claims, a *"processing unit"* is defined as one or more software modules, one or more hardware modules, or combinations thereof, which work together to perform operations on electronic data. The physical layout of the modules is not relevant. Holographic system **100** may also be used for phase tomography (PT) for producing a 3D refractive index map of a sample. More specifically, processing unit **102** is configured and operable to generate a 3D refractive index map of a sample.

In some embodiments, a single off-axis interferogram can be used to produce a 2D phase map image of the sample, and by multiplying the unwrapped phase map by the illumination wavelength and dividing by $2\pi$, an optical path delay (OPD) map can be produced, where the OPD value at each spatial point (x,y) is described by Eq. 1 below, where $T$ is the actual physical thickness of the sample in meters, $n_s$ is the integral refractive index of the sample across the sample

thickness, and $n_m$ is the refractive index of the surrounding medium, resulting in OPD being measured in meters.

$$OPD(x, y) = T(x, y) \times \{n_s(x, y) - n_m\} \qquad (1)$$

By acquiring multiple OPD maps from various projections, a 3D model of the sample's refractive index distribution can be produced, in a manner that is nearly identical to the 3D density maps produced from X-ray images in computerized tomography (CT) scans.

The process of producing the 3D model is usually performed using either the Fourier slice algorithm or optical diffraction tomography (ODT) algorithm. The Fourier slice algorithm treats diffraction as negligible and assumes that all light passes straight through the sample, while the ODT algorithm does not make these assumptions and includes diffractive effects. As such, the ODT algorithm is more accurate, yet more computationally heavy. In a sample that has only a small range of refractive index values, such as biological cells, the Fourier slice algorithm is a good and easy to run approximation.

As described above, reconstruction of the complex wavefront of the tomographic data typically requires Fourier transformation of each image frame, which in turn requires to locate/position a projection of the sample in the 3D Fourier space using knowledge on the angle at which the projection of the sample has been captured. Existing tomographic approaches are based on either illumination rotation or controlled sample rotation, using *a priori* knowledge on the angles of the acquired interferometric projections. Alternatively, random rotation of cells while flowing along a microfluidic channel or perfusion chamber can be used for tomography for a degenerate case, assuming rotation around a single axis. In a specific and non-limiting example, all the cells may flow in a microfluidic channel so that during the flow, each cell is placed at a different angle and most of the cells even make a full 360 degrees rotation. The use of a microfluidic channel enables to get cell friction with the channel floor and thus cause the cells to rotate along the channel. Most cells do rotate in the channel (full or partial rotation) and those that do not rotate, flow along the entire channel at one angle due to the slow flow. In this way, processing unit **102** may select the angles of the acquired interferometric projections to be used to the reconstruction. Using the different angles at which the cells flow, one or several viewing angles may be selected from each cell, processed, and add to a 3-D Fourier space. Finally, all the processed projections that make up the 3-D Fourier space using the different cells placed at different angles during the flow are processed to perform a reconstruction to the single three-dimensional refractive index profile of a plurality of cells.

In some embodiments, the present invention utilizes modeling geometry/shape of a selected portion of the cell and uses model data to process the raw tomographic data, including a sequence of tomographic image frames of the population of cells. As described above, the term "raw tomographic data" signifies a tomographic sequence having no information about angular orientations between the cell and tomographic imaging scheme in the tomographic sequences. Turning back to **Fig. 1,** processing unit **102** may then be configured and operable to determine at least one collection projection angle by correlating the cells to a two- or three-dimensional predefined geometrical shape such as ellipsoid or biconcave disc.

Processing utility **102B** may include a modeling utility **102E** being configured and operable to provide a number N (N≥1) of geometrical models GM1... GMn descriptive for a number M (M≥1) of selected portions P1...Pm of the cell. The geometrical model of the selected portion of the cell is a 3D structure descriptive for a shape of the portion of the cell of the type to be reconstructed appearing in the tomographic data. In this connection, it should be noted that the modeling utility **102E** may be configured and operable to create such models for each specific cell, as well as each specific portion of the cell, or may provide previously created model(s), for example by receiving such data from a central system/storage, as the case may be. For example, modeling utility **102E** may be configured and operable to apply a 2D fitting procedure to the tomographic image of each image frame in a sequence of the image frames, and determine, per each image frame, parameters of a 2D fit between a 2D projection of the 3D structure to the appearance of the respective portion of the cell in the image frame, thereby determining 2D fitted projections. In other embodiments, modeling utility **102E** may be configured and operable to apply a 3D fitting procedure to the tomographic image frames of a sequence of the image frames and determine, per each image frame, parameters of a 3D fit between the 3D structure and appearance of the corresponding portion of the cell in the light field image frame. The parameters of the 2D fit between the 2D projection of the 3D structure to appearance of the respective portion of the cell in the image frame, may include 2D centroid [x,y] parameters of the fit of the 2D projection of the 3D structure on the X-Y plane of the light field image frame, Gross-Yaw orientation $\alpha$, and 2D sizes $\Delta X'$ and $\Delta Y'$ of a bounding box of the fitted 2D projection in image plane coordinates X', Y' rotated by the Gross-Yaw orientation $\alpha$ relative to the X-Y axes of a plane of the light field image frame.

In some embodiments, processing utility **102B** is configured and operable to utilize the parameters of the 3D fit of the tomographic image frames and extract corresponding segments of the tomographic image frames at which a certain portion of the cell appears in the image frames from multiple respective orientations, and to process the corresponding segments of the image frames to obtain the 3D profile of the refractive index of the certain portion of the cell.

As described above, in a specific and non-limiting example, the cells flow in the microfluidic channel and rotate within it at different angles. Detector **104** may be a fast camera capturing the rotation of the cells and generating each frame being a two-dimensional interferometric projection of the three-dimensional cell at a certain angle. Then, processing utility **102B** reconstructs from each frame a complex wavefront. The quantitative phase from this wavefront is used in order to find the angle of the cell. First, the phase profile is binarized and the radii of the cell is found. Because of the shape of the cell (e.g. simple averaged cell model, elliptical form sperm cells or biconcave disc for red blood cells), its radii change during the rotation so that one radius remains about the same size throughout the rotation and the other radius becomes smaller and increases according to the different angles in which the cell is located. In this way, processing utility **102B** may identify which radius changes throughout the rotation and which is the radius that remains at a constant value. The information about the radii is then processed into the algorithm to find the angle at which the cell is at any given moment. Thus, by adjusting the radii to two-dimensional or three-dimensional shapes of the cell, the specific angle of each cell can be determined. The repetitive nature of the radii during cell rotation is enough for detecting the viewing angle of the projection. It is important to note that, the collective tomography enables to capture one frame from each cell i.e., one angle from each cell and the specific radii of the cell may be determined and matched to two-dimensional and three-dimensional shapes, to identify the specific angle at which the cell is located. After finding the angle of each cell, processing utility **102B** processes all the phase profiles and amplitudes (i.e. complex wavefronts) and the appropriate angles for each cell by using a reconstruction algorithm where each angle is placed in the three-dimensional Fourier space and finally, after placing all angles, the projections are collected in inversed 3D Fourier transform, yielding the collective 3D profile of the refractive index of the cell population.

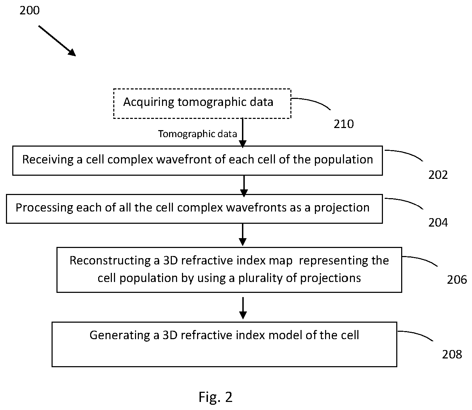

Reference is made to **Fig. 2** illustrating by way of a flow chart the main functional steps of the tomography method of the present invention. Tomographic method **200** may be used for analyzing a sample containing a population of biological cells. Method **200** may include in **202** receiving a cell complex wavefront of each cell of the population, in **204** processing the cell complex wavefronts as a projection, in **206** reconstructing a 3D refractive index map representing the cell population by using a plurality of projections coming from various cells in the population, and in **208** generating a three-dimensional refractive index model of the cell being indicative of the population of cells. As described above, method **200** may receive off-line tomographic data, or may include optionally acquiring tomographic data being indicative of a cell complex wavefront of each cell of the population in **210**. Acquiring tomographic data in **210** may include illuminating the sample.

Acquiring tomographic data in **210** may include determining at least one collection projection angle by correlating the cells to a two- or three-dimensional predefined geometrical shape. Processing the cell complex wavefronts as tomographic projection of the 3D refractive index map in **204** may include inducing multiple cells in the population to be acquired at different angles of projection. There are several ways in which different cells can be acquired from different angles, such as positioning them on curved surface or acquiring them during flow and rotation using microfluidics.

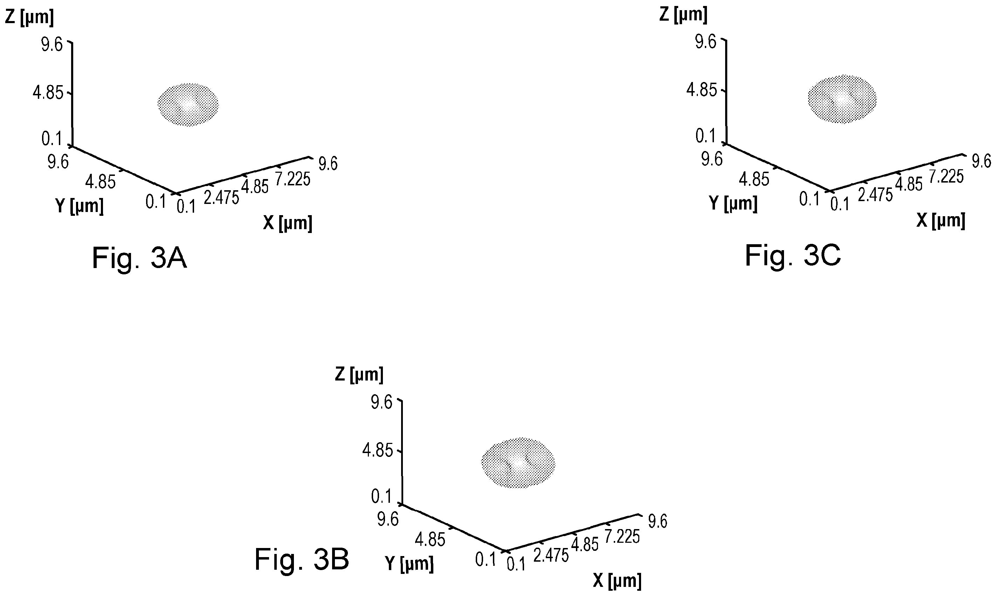

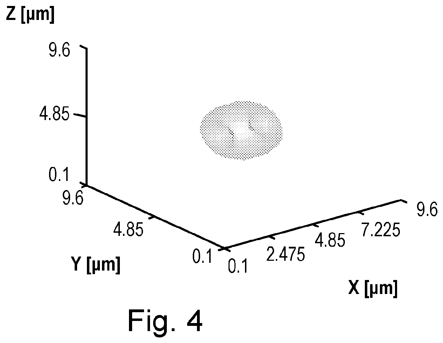

Reference is made to **Figs. 3A-3C** showing simulations for three blood cells with different diameters representing the tomography of the blood cells separately for sake of comparison. **Figs. 3A-3C** show a tomography with 360 projections from each cell. The cell of **Fig. 3A** shows a diameter of 6.8 $\mu$m and a volume of 139 $\mu$m$^3$. The cell of **Fig. 3B** shows a diameter of 7.6 $\mu$m and a volume of 218 $\mu$m$^3$. The cell of **Fig. 3C** has a diameter of 7.2 $\mu$m and a volume of 185 $\mu$m$^3$. **Fig. 4** shows an image being indicative of the collective tomography of the three cells of **Figs. 3A-3C** by processed by using the teachings of the present invention. A comparison was done between a tomography with 360 projections from each cell in the population **(Figs. 3A-3B)** and a tomography with 360 projections from all the cells together, each projection from a different cell **(Fig. 4).** The tomography with 360 projections from each cell provides a diameter of 7.2 $\mu$m and a volume of 160 $\mu$m$^3$. The collective tomography of these cells with 360 projections from all the cells together provides a diameter of 7 $\mu$m and a volume of 159 $\mu$m$^3$. As clearly shown the results enables to collectively analyze a population of biological cells at once and thus enables rapid (collective) analysis of a large population of cells. It should be understood that the processing time for analyzing the large population of cells according to the teachings of the present invention is much faster than by using the conventional techniques since in the present invention one tomogram is calculated for the entire population, instead of calculating a different tomogram for each the cells in the population. It also enables obtaining a single 3D model of a cell representing the entire population, on which many parameters, such as sizes and volumes of the cell and its organelles can be measured. This is a much more informative approach compared to the common practice, in which a single averaged parameter of the cell population, such as the average cell size, is only provided, rather than the full 3D collective model, on which many parameters can be inspected. Since in the collective tomography, the images are taken from different cells, high throughput processing is enabled).

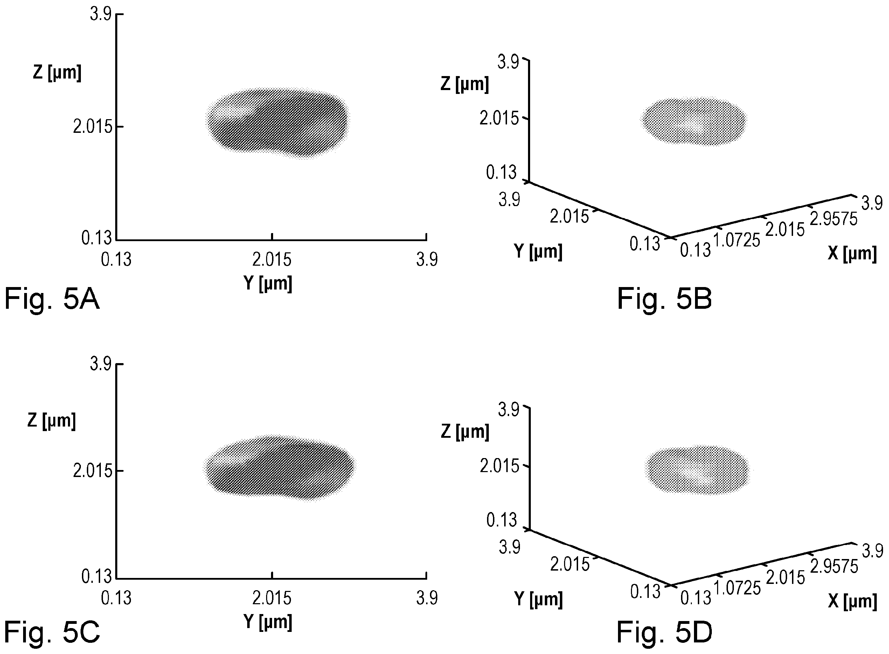

Reference is made to **Figs. 5A-5D** showing several tomograms of three cells for 360 projections. **Figs. 5A-5B** show tomography of three cells, 360 projections from each cell. **Figs. 5C-5D** show collective tomography of these cells with 360 projections from all the cells together obtained by using the teachings of the present invention. The error between the rows is 0.0097.

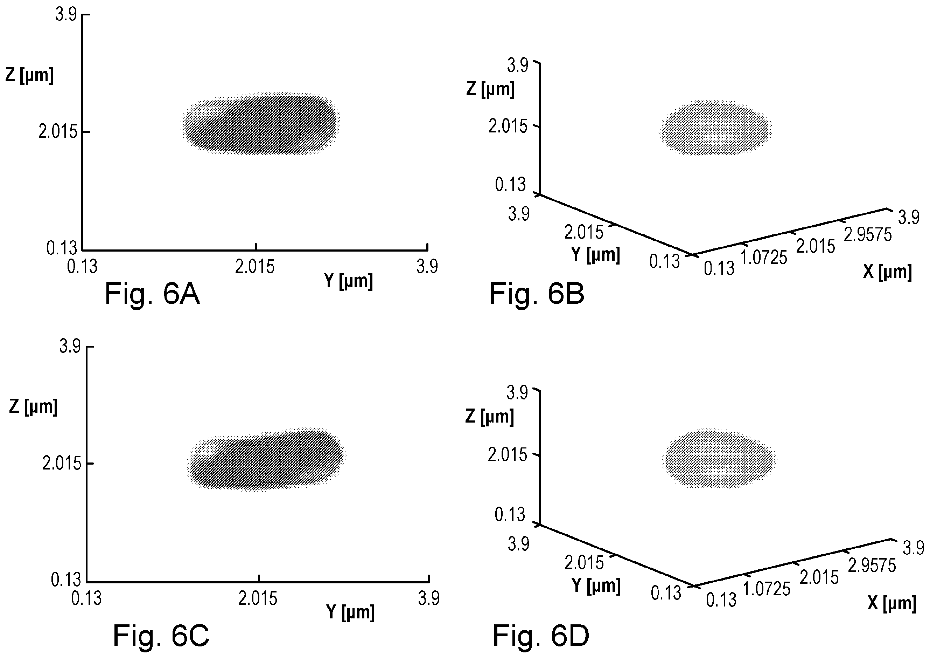

Reference is made to **Figs. 6A-6D** showing several tomograms of seven cells for 360 projections from. **Figs. 6A-6B** show tomography of seven cells, 360 projections from each cell. **Figs. 6C-6D** show collective tomography of these cells with 360 projections from all the cells together. The error between the rows is 0.0092. It has then been proven that the technique of the present invention enables to reconstruct a 3D refractive index profile of a plurality of cells at once.

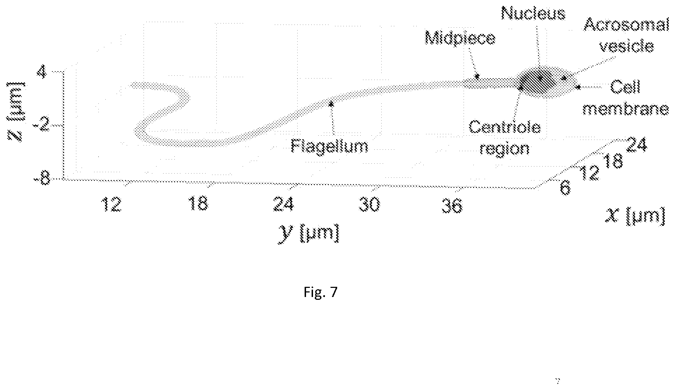

Reference is made to **Fig. 7** showing a full 3-D RI reconstruction of a sperm cell. Voxels, attributed to the midpiece or the rest of the flagellum, are represented by disk of constant diameter, which is equal to the calculated average width of the respective area. **Fig. 7** shows the internal structure of the sperm cell. The integral RI was found to be 1.383 in the midpiece and 1.365 in the rest of the flagellum. These figures are taken from Gili Dardikman-Yoffe, Simcha K. Mirsky, Natan T. Shaked, High-resolution 4-D acquisition of freely swimming human sperm cells without staining, Science Advances, Vol 6, No. 15, 08 April 2020 https://advances.sciencemag.org/content/6/15/eaay7619 and are given here to illustrate an example of a 3D RI cell profile

**Claims**

1. A tomographic method for analyzing a sample containing a population of biological cells of the same type, comprising:

    receiving tomographic data indicative of a plurality of cell complex wavefronts, wherein said plurality of cell complex wavefronts comprises the cell complex wavefronts corresponding to different cells of the population; processing the plurality of cell complex wavefronts as different projections coming from the different cells in the population, and generating a 3D refractive index model of the cell being indicative of the population of cells by using a plurality of projections coming from the different cells in the population.

2. The method of claim 1, wherein said processing of the plurality of the cell complex wavefronts comprises processing an image frame of the tomographic data as a projection, positioning the projection in a 3D Fourier domain at a determined orientation, and collecting a plurality of projections in inversed 3D Fourier transform to generate a 3D refractive index map of the sample.

3. The method of claim 1, further comprising quantifying a morphological and content contribution of a plurality of cells in a population of biological cells, wherein each cell contributes to a plurality of projections.

4. The method of claim 1 or 2, further comprising acquiring tomographic data being indicative of a cell complex wavefront of each cell of the population.

5. The method of claim 4, wherein acquiring tomographic data comprises at least one of: determining at least one collection projection angle by correlating the cells to a two- or three-dimensional predefined geometrical shape or illuminating the sample.

6. The method of any one of claims 2 to 5, wherein said processing of the cell complex wavefronts comprises processing tomographic projection of the 3D refractive index map comprising inducing multiple cells in the population to be acquired at different angles of projection.

7. The method of any one of claims 1 to 6, wherein the tomographic data comprises holographic data.

8. A tomography system (100) comprising a processing unit (102) being configured and operable to perform the tomographic method of claim 1.

9. The system of claim 8, wherein said processing unit is configured to process the cell complex wavefronts by processing an image frame of the tomographic data as a projection, positioning the projection in a 3D Fourier domain at a determined orientation, and collecting a plurality of projections in inversed 3D Fourier transform to generate a 3D refractive index map of the sample.

10. The system of claim 8 or 9, wherein each cell contributes to a plurality of projections.

11. The system of any one of claims 8 to 10, wherein said processing unit is configured and operable to determine at least one collection projection angle by correlating the cells to a two- or three-dimensional predefined geometrical shape.

12. The system of any one of claims 8 to 11, further comprising at least one of: an illumination unit (106) being configured and operable to illuminate a sample or a detector (104) being configured and operable to acquire tomographic data being indicative of a plurality of cell complex wavefronts of cells of the population and generating tomographic data indicative thereof; said processing unit (102) being configured and operable for receiving the tomographic data from said detector (104).

**13.** The system of claim 12, wherein said detector comprises a microscope.

**14.** The system of claim 13, wherein said microscope comprises an off-axis holographic phase microscope.

**Patentansprüche**

**1.** Tomografisches Verfahren zur Analyse einer Probe, die eine Population biologischer Zellen desselben Typs enthält, umfassend:

Empfangen von tomografischen Daten, die auf eine Vielzahl von Zellkomplex-Wellenfronten hinweisen, wobei die Vielzahl von Zellkomplex-Wellenfronten die Zellkomplex-Wellenfronten umfasst, die verschiedenen Zellen der Population entsprechen;
Verarbeiten der Vielzahl von Zellkomplex-Wellenfronten als verschiedene Projektionen, die von den verschiedenen Zellen in der Population stammen, und
Erzeugen eines 3D-Brechungsindexmodells der Zelle, das ein Indiz für die Zellpopulation ist, indem eine Vielzahl von Projektionen verwendet wird, die von den verschiedenen Zellen in der Population stammen.

**2.** Verfahren nach Anspruch 1, wobei das Verarbeiten der Vielzahl der Zellkomplex-Wellenfronten das Verarbeiten eines Bildrahmens der tomografischen Daten als Projektion umfasst, wobei die Projektion in einer 3D-Fourier-Domäne in einer bestimmten Orientierung positioniert wird, und das Erfassen einer Vielzahl von Projektionen in umgekehrter 3D-Fourier-Transformation, um eine 3D-Brechungsindexkarte der Probe zu erzeugen.

**3.** Verfahren nach Anspruch 1, ferner umfassend das Quantifizieren eines morphologischen und inhaltlichen Beitrags einer Vielzahl von Zellen in einer Population biologischer Zellen, wobei jede Zelle zu einer Vielzahl von Projektionen beiträgt.

**4.** Verfahren nach Anspruch 1 oder 2, ferner umfassend das Akquirieren von tomografischen Daten, die auf eine Zellkomplex-Wellenfront jeder Zelle der Population hinweisen.

**5.** Verfahren nach Anspruch 4, wobei das Akquirieren tomografischer Daten mindestens eines der Folgenden umfasst: Bestimmen mindestens eines Erfassungsprojektionswinkels durch Korrelieren der Zellen zu einer zwei- oder dreidimensionalen vordefinierten geometrischen Form oder Beleuchten der Probe.

**6.** Verfahren nach einem der Ansprüche 2 bis 5, wobei das Verarbeiten der Zellkomplex-Wellenfronten das Verarbeiten der tomografischen Projektion der 3D-Brechungsindexkarte umfasst, umfassend das Induzieren mehrerer Zellen in der Population, die in verschiedenen Projektionswinkeln akquiriert werden sollen.

**7.** Verfahren nach einem der Ansprüche 1 bis 6, wobei die tomografischen Daten holografische Daten umfassen.

**8.** Tomografiesystem (100), umfassend eine Verarbeitungseinheit (102), die so konfiguriert und betriebsbereit ist, dass sie das tomografische Verfahren nach Anspruch 1 durchführt.

**9.** System nach Anspruch 8, wobei die Verarbeitungseinheit so konfiguriert ist, dass sie die Zellkomplex-Wellenfronten verarbeitet, indem sie einen Bildrahmen der tomografischen Daten als Projektion verarbeitet, wobei die Projektion in einer 3D-Fourier-Domäne in einer bestimmten Orientierung positioniert wird, und eine Vielzahl von Projektionen in umgekehrter 3D-Fourier-Transformation erfasst, um eine 3D-Brechungsindexkarte der Probe zu erzeugen.

**10.** System nach Anspruch 8 oder 9, wobei jede Zelle zu einer Vielzahl von Projektionen beiträgt.

**11.** System nach einem der Ansprüche 8 bis 10, wobei die Verarbeitungseinheit so konfiguriert und betriebsbereit ist, dass sie mindestens einen Erfassungsprojektionswinkel durch Korrelieren der Zellen zu einer zwei- oder dreidimensionalen vordefinierten geometrischen Form bestimmt.

**12.** System nach einem der Ansprüche 8 bis 11, ferner umfassend mindestens eines der Folgenden: eine Beleuchtungseinheit (106), die zum Beleuchten einer Probe konfiguriert und betriebsbereit ist, oder einen Detektor (104), der zum Erfassen tomografischer Daten konfiguriert und betriebsbereit ist, die auf eine Vielzahl von Zellkomplex-Wellenfronten von Zellen der Population hinweisen und tomografische Daten erzeugen, die darauf hinweisen; wobei die Verarbeitungseinheit (102) zum Empfangen der tomografischen Daten von dem Detektor (104) konfiguriert und betriebsbereit ist.

**13.** System nach Anspruch 12, wobei der Detektor ein Mikroskop umfasst.

**14.** System nach Anspruch 13, wobei das Mikroskop ein holografisches Off-Axis-Phasenmikroskop umfasst.

**Revendications**

**1.** Procédé tomographique pour l'analyse d'un échantillon contenant une population de cellules biologiques du même type, comportant :

la réception de données tomographiques indiquant une pluralité de fronts d'ondes complexes cellulaires, dans lequel ladite pluralité de fronts d'ondes complexes cellulaires comporte les fronts d'ondes complexes cellulaires correspondant à différentes cellules de la population ;
le traitement de la pluralité de fronts d'onde complexes cellulaires en tant que différentes projections provenant des différentes cellules de la population, et
la génération d'un modèle d'indice de réfraction 3D de la cellule indiquant la population de cellules en utilisant une pluralité de projections provenant des différentes cellules de la population.

**2.** Procédé selon la revendication 1, dans lequel ledit traitement de la pluralité de fronts d'onde complexes cellulaires comporte le traitement d'une trame d'image des données tomographiques en tant que projection, le positionnement de la projection dans un domaine de Fourier 3D selon une orientation déterminée, et la collecte d'une pluralité de projections en transformation de Fourier 3D inversée pour générer une carte d'indice de réfraction 3D de l'échantillon.

**3.** Procédé selon la revendication 1, comportant en outre la quantification d'une contribution morphologique et de contenu d'une pluralité de cellules dans une population de cellules biologiques, dans lequel chaque cellule contribue à une pluralité de projections.

**4.** Procédé selon la revendication 1 ou 2, comportant en outre l'acquisition de données tomographiques indiquant un front d'onde complexe cellulaire de chaque cellule de la population.

**5.** Procédé selon la revendication 4, dans lequel l'acquisition de données tomographiques comporte au moins l'un parmi : la détermination d'au moins un angle de projection de collecte par corrélation des cellules avec une forme géométrique prédéfinie en deux ou trois dimensions ou l'éclairage de l'échantillon.

**6.** Procédé selon l'une quelconque des revendications 2 à 5, dans lequel ledit traitement des fronts d'onde complexes cellulaires comporte un traitement de projection tomographique de la carte d'indice de réfraction 3D comportant l'induction de multiples cellules dans la population à acquérir selon différents angles de projection.

**7.** Procédé selon l'une quelconque des revendications 1 à 6, dans lequel les données tomographiques comportent des données holographiques.

**8.** Système de tomographie (100) comportant une unité de traitement (102) configurée et utilisable pour réaliser le procédé tomographique selon la revendication 1.

**9.** Système selon la revendication 8, dans lequel ladite unité de traitement est configurée pour traiter les fronts d'onde complexes cellulaires en traitant une trame d'image des données tomographiques en tant que projection, en positionnant la projection dans un domaine de Fourier 3D selon une orientation déterminée, et en collectant une pluralité de projections en transformation de Fourier 3D inversée pour générer une carte d'indice de réfraction 3D de l'échantillon.

**10.** Système selon la revendication 8 ou 9, dans lequel chaque cellule contribue à une pluralité de projections.

11. Système selon l'une quelconque des revendications 8 à 10, dans lequel ladite unité de traitement est configurée et utilisable pour déterminer au moins un angle de projection de collecte par corrélation des cellules avec une forme géométrique prédéfinie en deux ou trois dimensions.

12. Système selon l'une quelconque des revendications 8 à 11, comportant en outre au moins un élément parmi : une unité d'éclairage (106) configurée et utilisable pour éclairer un échantillon ou un détecteur (104) configuré et utilisable pour acquérir des données tomographiques indiquant une pluralité de fronts d'onde complexes cellulaires de cellules de la population et générant des données tomographiques indiquant ceux-ci ; ladite unité de traitement (102) étant configurée et utilisable pour recevoir les données tomographiques dudit détecteur (104).

13. Système selon la revendication 12, dans lequel ledit détecteur comporte un microscope.

14. Système selon la revendication 13, dans lequel ledit microscope comporte un microscope holographique de phase hors axe.

*100*

S

Illumination unit
106

Detector 104

Tomographic data

Processing unit 102

Input utility 102A

Processor 102B

Modeling unit 102E

Memory 102C

Output utility 102D

3D refractive
index map

Fig. 1

200

Acquiring tomographic data

210

Tomographic data

Receiving a cell complex wavefront of each cell of the population

202

Processing each of all the cell complex wavefronts as a projection

204

Reconstructing a 3D refractive index map representing the cell population by using a plurality of projections

206

Generating a 3D refractive index model of the cell

208

Fig. 2

Fig. 3A

Fig. 3B

Fig. 3C

Z [μm]

9.6

4.85

0.1

9.6

4.85

0.1

Y [μm]

0.1

0.1

2.475

4.85

7.225

9.6

X [μm]

Fig. 4

Fig. 5A

Fig. 5B

Fig. 5C

Fig. 5D

Fig. 6A

Fig. 6B

Fig. 6C

Fig. 6D

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MOR HABAZA et al.** Rapid 3D refractive-index imaging of live cells in suspension without labelling using dielectrophoretic cell rotation. *Advanced Science*, 21 October 2016, vol. 4 (2)
- **CHOI, W.** ; **FANG-YEN, C.** ; **BADIZADEGAN, K. et al.** Tomographic phase microscopy.. *Nature Methods*, 2007, vol. 4, 717-719

- **YONGJIN SUNG** ; **WONSHIK CHOI** ; **CHRISTOPHER FANG-YEN** ; **KAMRAN BADIZADEGAN** ; **RAMACHANDRA R. DASARI** ; **MICHAEL S. FELD**. Optical diffraction tomography for high resolution live cell imaging. *Opt. Express*, 2009, vol. 17, 266-277
- **GILI DARDIKMAN-YOFFE** ; **SIMCHA K. MIRSKY** ; **NATAN T. SHAKED**. High-resolution 4-D acquisition of freely swimming human sperm cells without staining. *Science Advances*, 08 April 2020, vol. 6 (15)